# EUROPEAN PATENT APPLICATION

(11) **EP 4 274 205 A1**
(43) Date of publication of application: **08.11.2023**
(21) Application number: 22171203.7
(22) Date of filing: 02.05.2022
(51) Int. Cl.: H04N 1/23, G06F 3/12

(54) **DOCUMENT FORMING**

(71) Applicant: Hapa AG, 8604 Volketswil (CH)
(72) Inventor: BISANG, Markus, 9523 Züberwangen (CH); LIEBL, Felix, 8037 Zürich (CH); LAKSHMINARAYANAN, Shankar Ram, 8052 Zürich (CH); ULLMANN, Fabian, 8305 Dietlikon (CH); HÜTTENMOSER, Leah Elsa Ada, 8604 Volketswil (CH); TOMA, Patrick, 8409 Winterthur (CH)
(74) Representative: Hoffmann Eitle

(57) **Abstract**

A method comprising obtaining, by a first information processing apparatus, a first electronic document to be formed; obtaining, by said first information processing apparatus, at least one identifier, each of said at least one identifier corresponding to a respective content to be formed as part of said first electronic document, and each of said at least one identifier having one or more associated locations indicating where on said first electronic document said corresponding content is to be formed; sending document information, by said first information processing apparatus, to an image forming apparatus and a second information processing apparatus, said document information comprising: said first electronic document, for each of said at least one identifier, said one or more associated locations, and, for each of said at least one identifier, said corresponding content or said identifier; obtaining, by said image forming apparatus and said second information processing apparatus, based on said document information, a second electronic document, said second electronic document being generated by, for each of said at least one identifier, retrieving said corresponding content, and including into said first electronic document, said corresponding content in association with said one or more associated locations; forming, by said image forming apparatus, a physical document from said second electronic document; obtaining, by said second information processing apparatus, an image of said physical document; comparing, by said second information processing apparatus, said second electronic document and said image to detect whether a difference exist; and sending, by said second information processing apparatus, a comparison result to said image forming apparatus, said comparison result including, if a difference is detected, information for causing said image forming apparatus to interrupt an operation and display said comparison result on a display unit. A computer program, an information processing apparatus, a system are also disclosed.

## Description

### Technical field

Example aspects herein relate to preparing and forming electronic documents, and in particular to methods, a system, a computer program, and an information processing apparatus.

### Background

Digital printing is a type of image forming that allows an electronic document including any type of visual content (i.e. information, such as written material, images, graphics, logos, labels, artwork, designs, codes, etc.) to be formed on a physical medium. Visual content may be generated, and stored, on different devices. Although this facilitate the preparation of electronic documents, in particular for content to be shared between various electronic documents, this requires the retrieval of visual content from various devices, in order to obtain an electronic document with the entire content.

Some of the visual content to be included in an electronic document may also depend on variable factors, such as factors related to the physical medium on which it is to be formed (e.g. the size, shape, texture, material), factors related to the forming of the electronic document (e.g. capability of the device forming the document, geographic location, date, time), etc. Additionally, access to some of the content (such as digital assets) may be restricted. The preparation of electronic documents to be formed therefore requires interactions between various devices.

When the image of the electronic document is formed on the physical medium, errors may occur, for example due to unexpected events during the formation, errors in the device forming the image, etc., causing differences between the expected image of the electronic document and the image actually formed on the physical medium.

### Summary

According to a first example aspect herein, a method comprises obtaining, by a first information processing apparatus a first electronic document to be formed.

As used herein, an apparatus may "obtain" a specific information in various ways. Exemplary meanings of the term "obtain" as used herein covers the apparatus receiving the specific information, the apparatus receiving another information which is processed to produce/generate the specific information, and the apparatus generating the specific information anew.

Preferably, the method comprises obtaining, by said first information processing apparatus, at least one identifier. Each of said at least one identifier may correspond to a respective content to be formed as part of said first electronic document. Each of said at least one identifier may have one or more associated locations indicating where on said first electronic document said corresponding content is to be formed.

Preferably, the method comprises sending document information, by said first information processing apparatus, to an image forming apparatus and/or a second information processing apparatus. Said document information may comprise one or more of: said first electronic document; for each of said at least one identifier, said one or more associated locations; and, for each of said at least one identifier, said corresponding content or said identifier.

As used herein, the term "send" should not be understood to necessarily imply that the "sending" apparatus initiates the transfer of information. The "receiving" apparatus may instead be requesting the information. Alternatively, the information may be stored in a memory accessible to both apparatus, in which case the term "send" should be understood to cover an apparatus storing the information in the memory and the other apparatus retrieving it.

The first information processing apparatus sending document information to an image forming apparatus and/or a second information processing apparatus may mean the first information processing apparatus sending document information to the image forming apparatus, the first information processing apparatus sending document information to the second information processing apparatus. Or, this may mean the first information processing apparatus sending document information to both the image forming apparatus and the second information processing apparatus, either at the same time (e.g. as a single sending operation) or at different times. (e.g. as separate sending operations).

Additionally, the method according to the first example aspect may include one or more of the following:
Preferably, the method comprises obtaining, by said image forming apparatus and said second information processing apparatus, based on said document information, a second electronic document. Said second electronic document may be generated by, for each of said at least one identifier, retrieving said corresponding content, and including into said first electronic document, said corresponding content in association with said one or more associated locations.

As used herein, a first apparatus (e.g. the image forming apparatus) and a second apparatus (e.g. the second information processing apparatus) "obtaining" a specific information does not necessarily mean that the first apparatus and the second apparatus obtains the information in the same way. For example, said image forming apparatus and said second information processing apparatus obtaining said second electronic document may mean that said second information processing apparatus generates said second electronic document whilst said image forming apparatus receives said second electronic document, or vice versa. It can also mean that said second information processing apparatus and said image forming apparatus each receive said second electronic document, or that one or both of said second information processing apparatus and said image forming apparatus receives some information (e.g. said document information) based on which the one or both of said second information processing apparatus and said image forming apparatus generates said second electronic document.

Preferably, the method comprises forming, by said image forming apparatus, a physical document from said second electronic document.

Preferably, the method comprises obtaining, by said second information processing apparatus, an image of said physical document.

Preferably, the method comprises comparing, by said second information processing apparatus, said second electronic document and said image to detect whether a difference exist.

Preferably, the method comprises sending, by said second information processing apparatus, a comparison result to said image forming apparatus. Said comparison result may include, if a difference is detected, information for causing said image forming apparatus to interrupt an operation.

Preferably, said information included in said comparison result causes said image forming apparatus to display said comparison result on a display unit. In some cases, the information included in said comparison result may cause said image forming apparatus to display said comparison result on said display unit without causing said image forming apparatus to interrupt said operation.

In some implementations, said document information may comprise for one or more of said at least one identifier, both said corresponding content and said identifier.

Accordingly, the apparatus receiving the document information may replace, if necessary, the corresponding content by retrieving new content corresponding to the identifier. This may be particularly useful if the first information processing apparatus is unaware that the content corresponding to some identifiers may depend on variable factors depending on the receiving apparatus.

In some implementations, said at least one identifier may be associated with a pair including of one of said one or more associated locations, and transformation information, said transformation information indicating a transformation to be applied to content that is to be included into said electronic document at said location in the pair.

In some implementation, said transformation information indicates a manipulation, optionally comprising at least one of a scaling, a shear transformation, a rotation and a projection. Optionally, the transformation information may indicate that one or more filter is to be applied to the content.

In some implementations, said first information processing apparatus generates said second electronic document, and sends said second electronic document as said document information.

Accordingly, any error that may occur when the image forming apparatus and/or the second information processing apparatus retrieves content may be avoided.

In some implementations, said first information processing apparatus sends, as said document information, said first electronic document, said at least one identifier, and for each of said at least one identifier, said one or more associated locations, to said image forming apparatus and said second information processing apparatus. Said image forming apparatus and said second information processing apparatus generate said second electronic document. As explained herein, both said image forming apparatus and said second information processing apparatus may generate said second electronic document in parallel, or one of said image forming apparatus and said second information processing apparatus may generate said second electronic document then provide to the other one of said image forming apparatus and said second information processing apparatus.

In some implementations, said first information processing apparatus generates a third electronic document by retrieving, for each of a first subset of said at least one identifier, said corresponding content, and including said corresponding content into said third electronic document in association with said one or more associated locations. Said first information processing apparatus may sends, as said document information, said third electronic document and a second subset of said at least one identifier. Each of said at least one identifier may be in one of said first subset and said second subset only. In other words, the at least one identifier are divided into the first subset and the second subset. The first subset and the second subset may be defined as absolute complementary subsets in the set of the at least one identifier.

In some implementations, the first information processing apparatus may determine whether said at least one identifier(s) have a variable corresponding content that depends on parameters related to the image forming apparatus and/or the second information processing apparatus, and determine said first subset to include identifier(s) not having a variable corresponding content.

Accordingly, the content of the first subset can be included before sending the document, such that a same document may be prepared for a plurality of image forming apparatus and/or a plurality of second information processing apparatus.

In some implementations, the first information processing apparatus may determine the size of content corresponding to each of said at least one identifier, and determine said first subset to include any identifier having corresponding content with a size smaller or equal to a predetermined threshold size.

Accordingly, a size of the electronic document sent by the first information processing apparatus may be controllably set, whilst reducing processing requirements for the image forming apparatus and/or the second information processing apparatus.

In some implementation, the predetermined threshold size may depend on a parameter of the image forming apparatus and/or a parameter of the second information processing apparatus.

Accordingly, safe transmission of the electronic document to the image forming apparatus and/or the second information processing apparatus can be ensured.

In some implementations, additionally or alternatively determining the permanence or the size of the content, the first information processing apparatus may determine whether the image forming apparatus 30 and/or the second information processing apparatus 20 has access to said content corresponding to each of said at least one identifier, and to determine any identifier whose content is not accessible to be included in the first subset.

Accordingly, the preparation and forming of document may be improved whilst avoiding risks of compromising the security of the location storing content, such as digital assets.

In some implementations, said first information processing apparatus generates said second electronic document and sends said second electronic document to said second information processing apparatus. Said first information processing apparatus sends, as said document information, said third electronic document and said second subset of said at least one identifier, to said image forming apparatus. Said image forming apparatus generates said second electronic document from said third electronic document and said second subset of said at least one identifier.

Accordingly, the size of transmission to the image forming apparatus may be reduced whilst detecting errors occurring when the image forming apparatus retrieves content corresponding to the second subset.

In some implementations, said comparison result includes difference information indicating one or more locations on said physical document where said difference is detected. Each indicated location may be a spot or an area on the physical document.

In some implementations, said image forming apparatus indicates on said physical document said one or more locations based on said difference information.

In some implementations, said comparison result causing said image forming apparatus to display, on a display unit, said second electronic document and to indicate said one or more locations on the displayed second electronic document based on said difference information.

In some implementations, said first information processing apparatus obtains said at least one identifier and said one or more associated locations, based on user input.

In some implementations, said first information processing apparatus sends said document information to a plurality of image forming apparatus and/or a plurality of second information processing apparatus. Each of said plurality of second information processing apparatus may have a respective corresponding one of said plurality of image forming apparatus. Each of said plurality of image forming apparatus may: obtain, based on said document information, a respective version of said second electronic document, and form a respective version of said physical document. Each of said plurality of second information processing apparatus may: obtain, based on said document information, said respective version of said second electronic document; obtain an image of said respective version of said physical document formed by said corresponding image forming apparatus; compare said respective version of said second electronic document and said image of said respective version of said physical document to detect whether a difference exist; and send a respective comparison result to said corresponding image forming apparatus. Said respective comparison result may include, if a difference is detected, information for causing said corresponding image forming apparatus to interrupt an operation.

Preferably, said information causes included in said respective comparison result causes said image forming apparatus to display said comparison result on a corresponding display unit.

In some implementations, said second information processing apparatus sends said comparison result to the first information processing apparatus if said difference is detected. Accordingly, the first information processing apparatus may determine that the operation of other image forming apparatus should be interrupted, if they are likely to form documents with the same difference.

In some implementations, said image of said physical document may include information allowing the second information processing apparatus to detect differences that are imperceptible, or difficultly perceived, by a human eye. Said information may be information on a near/far infrared, and/or near/far ultraviolet range of frequency, an image resolution higher than typical human sight, or detecting other information not easily perceived by humans.

In some implementations, the image capturing means may be arranged to capture information on another range of frequency, preferably a range corresponding to wavelengths of 380 nm to 900nm,

According to a second example aspect herein, a system comprises a first information processing apparatus, a second information processing apparatus, and an image forming apparatus. Said first information processing apparatus, said second information processing apparatus, said image forming apparatus comprise means adapted for carrying out the method of the first example aspect herein.

According to a third example aspect herein, a computer program comprises instructions which, when executed by an information processing apparatus, cause said information processing apparatus to perform at least partially the method of the first example aspect herein.

According to a fourth example aspect herein, a computer program comprises instructions which, when executed by an image forming apparatus, cause said image forming apparatus to perform at least partially the method of the first example aspect herein.

According to a fifth example aspect herein, a system comprises a first information processing apparatus, a second information processing apparatus, and an image forming apparatus.

Preferably, said first information processing apparatus is configured to obtain a first electronic document to be formed.

Preferably, said first information processing apparatus is configured to obtain at least one identifier. Each of said at least one identifier may be corresponding to a respective content to be formed as part of said first electronic document. Each of said at least one identifier may have one or more associated locations indicating where on said first electronic document said corresponding content is to be formed.

Preferably, said first information processing apparatus is configured to send document information to the image forming apparatus and/or the second information processing apparatus. Said document information may be comprising: said first electronic document; for each of said at least one identifier, said one or more associated locations; and, for each of said at least one identifier, said corresponding content or said identifier.

Preferably, said image forming apparatus is configured to obtain, based on said document information, a second electronic document. Said second electronic document may be generated by, for each of said at least one identifier, retrieving said corresponding content and including into said first electronic document, said corresponding content in association with said one or more associated locations.

Preferably, said image forming apparatus is configured to form a physical document from said second electronic document.

Preferably, said second information processing apparatus is configured to obtain said second electronic document.

Preferably, said second information processing apparatus is configured to obtain an image of said physical document.

Preferably, said second information processing apparatus is configured to compare said second electronic document and said image to detect whether a difference exist.

Preferably, said second information processing apparatus is configured to send a comparison result to said image forming apparatus. Said comparison result may include, if a difference is detected, information for causing said image forming apparatus to interrupt an operation.

Preferably, said system further comprises a display unit.

Preferably, said information included in said comparison result causes said image forming apparatus to display, said comparison result on said display unit.

According to a sixth example aspect herein, there is provided a method for an information processing apparatus.

Preferably, the method comprises obtaining an electronic document to be formed. Said electronic document may comprise content to be formed at one or more locations on said electronic document.

Preferably, the method comprises obtaining an image of a physical document formed by an image forming apparatus from said electronic document.

Preferably, the method comprises comparing said electronic document and said image to detect whether a difference exist.

Preferably, the method comprises sending a comparison result to said image forming apparatus. Said comparison result may comprises, if a difference is detected, information for causing said image forming apparatus to interrupt an operation.

Preferably, said information included in said comparison result causes said image forming apparatus to display said comparison result on a display unit.

In some implementations, the method comprises receiving, a second electronic document and at least one identifier. Each of said at least one identifier may be corresponding to a respective second content to be formed as part of said second electronic document. Each of said at least one identifier may have one or more associated second locations indicating where on said second electronic document said corresponding second content is to be formed.

In some implementations, the method comprises generating said electronic document by, for each of said at least one identifier, retrieving said corresponding second content, and including into said second electronic document said corresponding second content in association with said one or more associated second locations.

According to a seventh example aspect herein, a computer program comprises instructions which, when executed by one or more processors, cause said processors to perform the method of the sixth example aspect herein.

According to an eighth example aspect herein, there is provided an information processing apparatus.

Preferably, the information processing apparatus comprises a document obtaining unit configured to obtain an electronic document to be formed. Said electronic document may comprise content to be formed at one or more location on said electronic document.

Preferably, the information processing apparatus comprises an interface configured to obtain an image of a physical document formed by an image forming apparatus from said electronic document.

Preferably, the information processing apparatus comprises a detection unit configured to compare said electronic document and said image to detect whether a difference exist.

Preferably, the interface is configured to send a comparison result to said image forming apparatus. Said comparison result may be comprising, if a difference is detected, information for causing said image forming apparatus to interrupt an operation.

Preferably, said information included in said comparison result is for also causing said image forming apparatus to display said comparison result on a display unit.

In some embodiments, said interface is configured to receive a second electronic document and at least one identifier. Each of said at least one identifier may correspond to a respective second content to be formed as part of said second electronic document. Each of said at least one identifier may have one or more associated second locations indicating where on said second electronic document said corresponding content is to be formed.

In some embodiments, said document obtaining unit is configured to generate said electronic document by, for each of said at least one identifier, retrieving said corresponding second content and including into said second electronic document, said corresponding second content in association with said one or more associated second locations.

As used herein, the content corresponding to an identifier may include a single item of content (e.g. a logo, a text, an image) or more than one distinct item of content, which may be separate or partially or entirely superimposed.

Although the above has been described with reference to a physical document where an image of an electronic document is formed on a physical medium, some implementations of the methods, apparatus and systems disclosed herein should be understood to apply to a case where the electronic document includes, as content, a model of a three dimensional object to be manufactured (i.e. by an additive manufacturing technology such as 3D printing). In such implementations, the image forming apparatus may preferably be an object manufacturing apparatus arranged to produce a physical three dimensional object corresponding to the content in the electronic document, using any suitable additive manufacturing technology. Accordingly, the term "physical document" or "visual content" should not be construed to be limited to two-dimensional information. Preferably, the image capturing means may capture an image of such three dimensional object from more than one angle, or it may capture three dimensional information, such as using three-dimensional scanning (e.g. LIDAR or any other suitable range determining technology).

### Brief description of the drawings

Embodiments of the present invention, which are presented for better understanding the inventive concepts, but which are not to be seen as limiting the invention, will now be described with reference to the figures in which:
Figure 1 shows a schematic diagram illustrating an example of a system in example embodiments;
Figure 2 shows a schematic diagram illustrating an example of forming a physical document from an electronic document and detecting differences between the physical and electronic documents;
Figure 3 shows a schematic diagram illustrating an example of a general kind of programmable processing apparatus that may be used to implement an information processing apparatus in example embodiments;
Figures 4A to 4C show a process performed by a first information processing apparatus, an image forming apparatus and a second information processing apparatus, in a first example implementation;
Figure 5 show processing operations performed by a first information processing apparatus, an image forming apparatus and a second information processing apparatus, in a second example implementation;
Figure 6A and 6B show processing operations performed by a first information processing apparatus, a database, an image forming apparatus and a second information processing apparatus, in a third example implementation;
Figure 7 shows a schematic diagram illustrating an information processing apparatus in example embodiments;
Figure 8 shows processing operations performed in example embodiments by an information processing apparatus;
Figures 9A and 9B show processing operations performed in example embodiments.

### Detailed description

Although example embodiments will be described below, it will be evident that various modifications may be made to these example embodiments without departing from the broader spirit and scope of the invention. Accordingly, the following description and the accompanying drawings are to be regarded as illustrative rather than restrictive.

In the following description and in the accompanying figures, numerous details are set forth in order to provide an understanding of various example embodiments. However, it will be evident to those skilled in the art that embodiments may be practiced without these details.

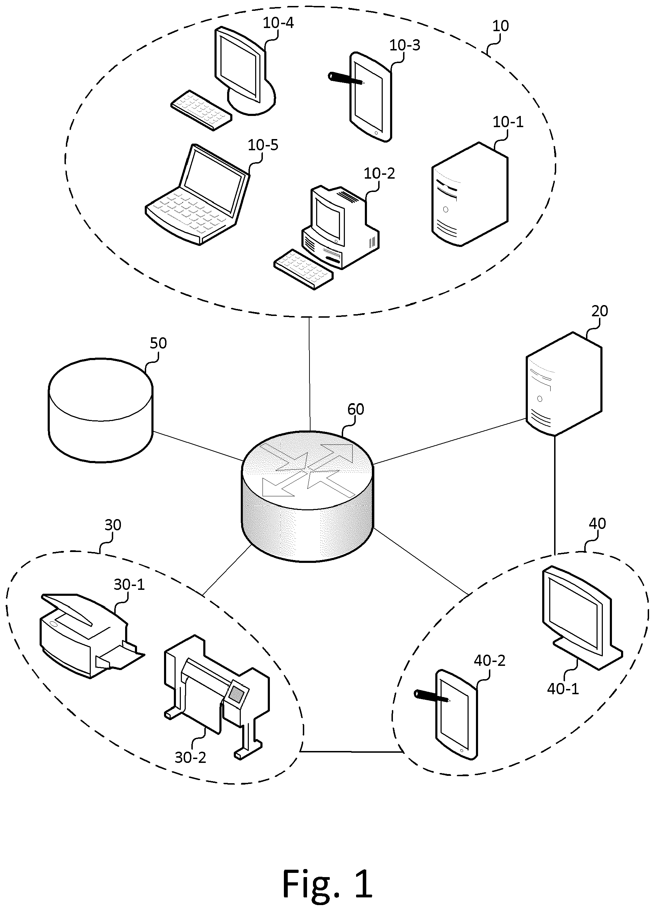

Figure 1 is a schematic diagram showing an example of a system in an example embodiment. In the example, a first information processing apparatus 10, communicates with a second information processing apparatus 20, an image forming apparatus 30, and a database 50, via a network 60. Also shown is a display unit 40 which can communicate with the second information processing apparatus 20 and the image forming apparatus 30, for example via the network 60 or via an optional secure direct connection.

Figure 1 shows, by way of example, one second information processing apparatus 20 communicating via the network 60, although there may be more than this. Similarly, there may be more than one image forming apparatus 30 communicating to the first information processing apparatus 10 and the (one or more) second information processing apparatus 20. In other words, it should be understood that the system is scalable to more than one of each of the one second information processing apparatus 20 and the image forming apparatus 30.

Aspects of the configuration and processing operations of each first information processing apparatus 10, second information processing apparatus 20, image forming device 30 that are helpful for understanding embodiments are described in detail below, while the description of other aspects, which will be familiar to those skilled in the art, is omitted for the sake of clarity.

The network 60 may comprise one or more networks, such as the Internet, a telephone network, a cellular data network, etc. The network 60 may also comprise a virtual private network (VPN), a local area network (LAN), a wide area network (WAN), or any other form of network.

For example, the second information processing apparatus 20, the image forming device 30 and the display unit 40 may be communicating with each other via a LAN, which may be connected to the Internet, to communicate with the first information processing apparatus 10.

An information processing apparatus 10 may comprise any processing apparatus that can run applications, such as a server 10-1 (e.g. a server running a virtual machine), a desktop computer 10-2, a tablet computer 10-3, a terminal 10-4, a laptop computer 10-5, or some other form of processing device such as a smartphone, etc. The information processing apparatus 10 communicates with the network 60 through any suitable communication link, such as wireless communication link (for example a Wi-Fi or cellular telephone data link) or a wire, fire-optic cable, etc. Each communication link may not be permanent.

As will be explained in more detail below, the information processing apparatus 10 (whether as a server 10-1, a desktop computer 10-2, a tablet computer 10-3, a terminal 10-4, a laptop computer 10-5, or any other form) processes a document to be formed by the image forming apparatus 30.

Similarly, information processing apparatus 20 may comprise any processing apparatus that can run applications, including all examples provided for the information processing apparatus 10 above (i.e. a server, a desktop computer, a tablet computer, a terminal, a laptop computer, or any other form). Although it is shown on Figure 1 in the form of a server 20, this is purely illustrative.

Image forming apparatus 30 may be any type of image forming device 30 capable of receiving an electronic document and forming (an image of) the document on a physical medium. Any suitable way of forming a document may be used, such as printing, stamping, engraving, etching, carving, impressing, embossing, or combination thereof. By way of non-limiting examples, the image forming apparatus 30 may be a printer (e.g. digital single-color or multicolor printer, with inline or off-line printing capability, a flexographic printer, a UV printer, an ), printing technologies with exposure technologies such as imagesetters, Computer-To-Plate (CTP), technologies related to offset printing, pad printing, etc., an engraver (e.g. photoengraver or laser engraver), a labeler, etc. a plotter, a multi-function device, etc. Figure 1 shows, by way of non-limiting example, a printer 30-1 and a plotter 30-2. The image forming apparatus 30 may be a device to operate separately or a module to be mounted on or combined with another device such as a packager or labeler.

As such, it would be understood that any suitable physical medium may be used. By way of non-limiting examples, the physical medium, which may be defined as a substrate, may be made from materials such as paper, cardboard, plastic, wood-based material, composites, glass, ceramic, textile, leather or any combination thereof. By way of further non-limiting examples, the physical medium may be in any suitable form, such as a sheet (whether a single sheet or from a roll of material), a foil, a package of a product, etc., whether flat or defining a volume.

The display unit 40 may be a unit separate from, and communicating with the image forming apparatus 30 (e.g. via the network 60 or a direct connection), or it may be part of the image forming apparatus 30, for example as a display unit provided to facilitate user interaction with the image forming apparatus 30. By way of non-limiting examples, the display unit 40 may be a monitor 40-1 or a tablet computer 40-2, which may be viewed by a user supervising the image forming apparatus 30.

Database 50 may include one or more physical storage media, and store identifiers in association with corresponding content. Although a single database 50 is shown, more than one database 50 may be managed and accessed separately, or collectively, as a database system.

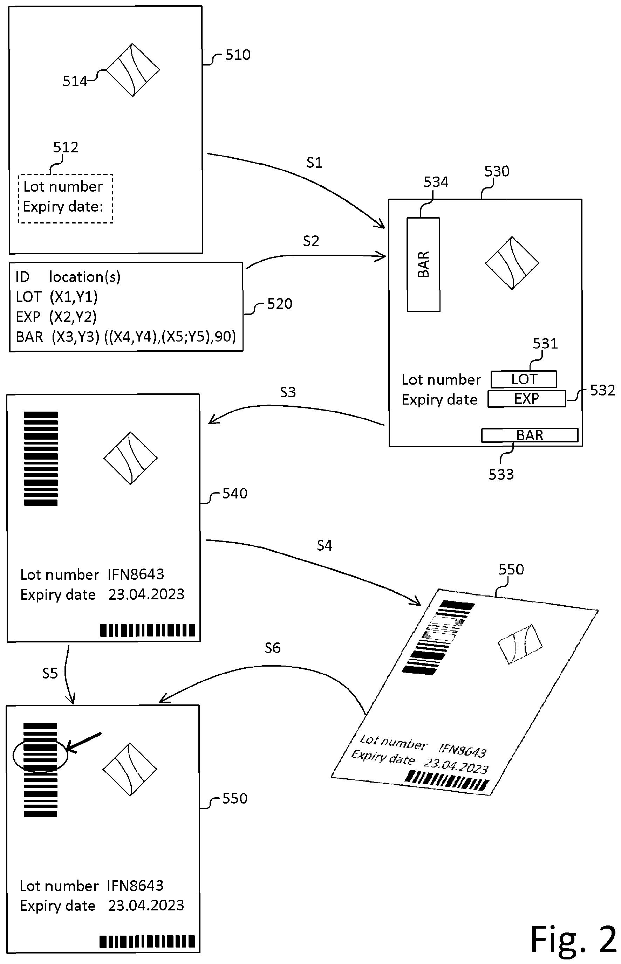

Referring now to Figure 2, an example of forming a physical document from an electronic document and detecting differences between the physical and electronic documents will now be described.

As will be explained below, parts of the process shown on Figure 2 may be performed by the first information processing apparatus 10, the second information processing apparatus 20, the image forming apparatus 30 and the display unit 40.

A first electronic document D1 to be formed is obtained. For ease of convenience, the present disclosure will refer to forming an image of all visual content included in an electronic document, as forming the electronic document or forming a physical document from the electronic document.

Item 510 on Figure 2 shows a visualization of the document D1, i.e. how the first electronic document would be displayed or formed on an image.

In the example shown on Figure 2, document D1 includes a first written content 512 and a logo 514. However, this would be understood to be an example, and document D1 may include any number of content of various types. In particular, document D1 may, in some cases, be a document void of any visual content. In addition to the content shown on Figure 2, a computer file storing the first document D1 may include metadata, such as data defining the data format of the file itself, data defining the visual content included in the file. Electronic document D1 may be of any suitable data format, such as PDF, XML, PNG, HTML, TIFF, PSD.

As shown in box 520, at least one identifier and their associated location(s) are obtained. Each identifier may have one associated location, or may have more than one associated location.

The identifier is for identifying a content to be included in the document D1. For example, if document D1 is stored as a PDF file, content may be included by adding a tag (e.g. a BBox tag) to the file storing document D1.

The associated location indicates where on the electronic document D1 this content should be included. The location on the document D1 may be defined using coordinates (typically cartesian coordinates defining the two-dimensional surface of the physical medium on which the document D1 is to be formed) based on a reference location in the document.

In the example shown on Figure 2, as shown in box 520, a first identifier "LOT" corresponding to a lot number and an associated first location (X1,Y1), a second identifier "EXP" corresponding to an expiry date and an associated second location (X2,Y2), and a third identifier BAR corresponding to a barcode and associated third location (X3, Y3) and a fourth location (X4, Y4) is obtained, i.e. the identifier BAR is associated with two locations. The fourth location also includes additional information to define how the barcode corresponding to the identifier "BAR" should be disposed at the fourth location. This additional information indicates how the barcode should be transformed, in order to fit the constraints defined by the location and the additional information, and may therefore be considered transformation information.

For example, another pair of coordinates (X5,Y5) may be provided to define, with the fourth location (X4,Y4), an area on the document. Additionally, a rotation angle (90) may be provided.

However, it would be understood these are purely exemplary, and any other data defining a disposition of the content at the location may be used instead.

As in the present example, the transformation information may define both the shape into which the content is to be fit, and a transformation (rotation by 90 degrees) that is to be applied to the content. However, the transformation information may instead define only each transformation to be applied (e.g. rotate by X degrees, scale by a ratio of 150% along a first direction, scale by a ratio of 120% in another direction, etc.)

It would be understood that the transformation information may indicating any suitable transformation to be applied to content that is to be included into said electronic document at that location (i.e. the location paired with the transformation information).

For example, the transformation information may indicate a scaling, a shear transformation, a rotation, a projection of the content, or the application of a filter on the content. It would be understood that any other suitable image transformation may be used instead or in addition to those described above.

It would be understood that the above indicated identifiers are purely exemplary, and any other written content (such as text, names, label, instructions, packaging information, pharmaceutical product information, etc.), images, designs or codes (e.g. machine readable one or two-dimensional codes such as QR codes), or any other suitable types of content as disclosed herein, may be used instead.

Following arrows S1 and S2 on Figure 2, item 530 illustrates how an information processing apparatus or an image forming device would interpret the associations between the identifiers and the location, i.e. how document D1 would be displayed or formed. Namely, content corresponding to identifier LOT is to be displayed at location X1,Y1, as indicated by box 531. The location X1,Y1 may be a central point of box 531, the point nearest the reference location (e.g. the bottom left corner of the visualization, or any other predetermined point defining the spatial relationship between the document's reference location and the identifier's associated location.

Thus, by including into an electronic document, content corresponding to an identifier in association with one or more locations associated with the identifier, the included content appears at the location(s) associated with the identifier when an image of the electronic document is formed on a physical document.

Similarly, content corresponding to identifier EXP is to be displayed at location X2, Y2, as indicated by box 532, and content corresponding to identifier BAR is to be displayed at location X3, Y3, as indicated by box 533.

In addition, content corresponding to identifier BAR is to be displayed at location (X4, Y4), as indicated by box 534. At that location, the content is to be disposed based on additional information (i.e. data defining a disposition) provided with the fourth location (X4,Y4). Specifically, content corresponding to identifier BAR should occupy an area defined by the coordinates (X4,Y4) and (X5,Y5) (which may be, for example the coordinates at diagonally opposite corners of the box 534). In addition, content corresponding to identifier BAR should be rotated by an angle. In the shown example, the content is to be rotated counter-clockwise by an angle of 90 degrees.

Following arrow S3 on Figure 2, item 540 illustrates document D1 including the content corresponding to each identifier at the associated locations. For ease of reference, this will be referred to as document D2. For example, box 531 is replaced by the content "IFN8643" corresponding to identifier LOT, box 532 is replaced by the content "23.04.2022" corresponding to identifier EXP, and boxes 533 and 534 are replaced by a barcode corresponding to identifier BAR. The barcode replacing these boxes is identical, although at the location (X4,Y4), it is adjusted (e.g. expanded) to fit the area defined by the coordinates (X4,Y4) and (X5,Y5).

Following arrow S4 on Figure 2, item 550 illustrates an example of a physical document formed from the document D1, in which the barcode at location (X4, Y4) is partially missing, for example due to an issue with the image forming apparatus. Generally, however, as the physical document is formed from the document D1, the physical document displays all visual content included in document D1, as the associated locations.

Following arrows S5 and S6 on Figure 2, a comparison of the document D2 and an image of the physical document, leads to the detection of a difference at the location of the barcode as shown on item 550 (i.e. a difference between the compared physical and electronic documents), where the detected difference can be indicated. Although Figure 2 shows a circle and arrow as an example of an indicator, this would be understood to be purely illustrative, and any other indicator can be used instead. The difference can be indicated, for example, on the physical document, on an image of the physical document displayed, and/or an image of the document D2 being displayed. On the physical document, the indicator may be permanently marked (e.g. by forming an image of the indicator on top of the formed document) or temporary (e.g. by projecting an optical indicator on the detected difference).

Accordingly, errors in a physical document can be accurately detected. Once detected, the operation of the image forming apparatus may be interrupted to minimize unnecessary use of resources.

In particular, as noted below, some content may be retrieved by the image forming apparatus. Accordingly, errors occurring during the retrieval of content by the image forming apparatus may lead to errors in the formed physical document.

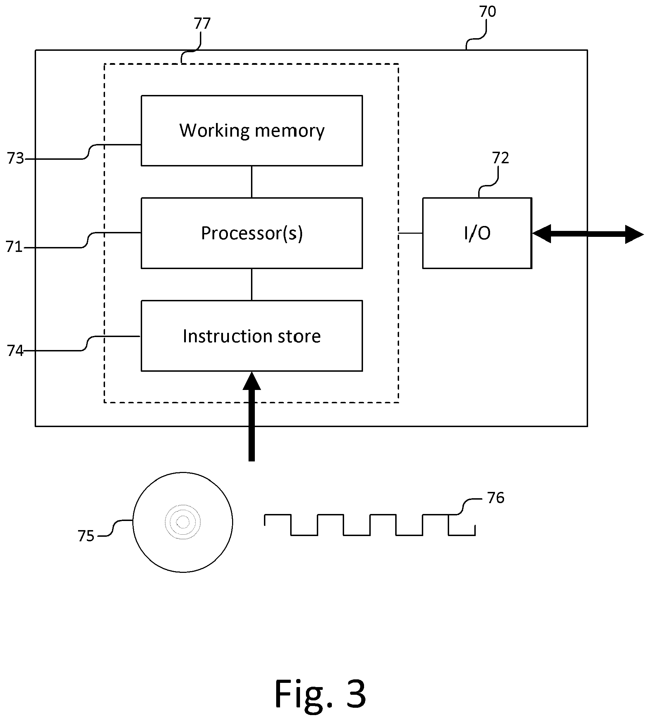

Referring now to Figure 3, an example of a general kind of programmable processing apparatus 70 that may be used to implement an information processing apparatus (e.g. a first information processing apparatus 10, and/or a second information processing apparatus 20) is shown.

The programmable processing apparatus 70 comprises one or more processors 71, one or more input/output communication modules 72, one or more working memories 73, and one or more instruction stores 74 storing computer-readable instructions which can be executed by one or more processors 71 to perform the processing operations as described hereinafter.

An instruction store 74 is a non-transitory storage medium, which may comprise a non-volatile memory, for example in the form of a read-only-memory (ROM), a flash memory, a magnetic computer storage device (for example a hard disk) or an optical disk, which is pre-loaded with the computer-readable instructions. Alternatively, an instruction store 54 may comprise writeable memory, such as random access memory (RAM) and the computer-readable instructions can be input thereto from a computer program product, such as a non-transitory computer-readable storage medium 75 (for example an optical disk such as a CD-ROM, DVD-ROM, etc.) or a computer-readable signal 76 carrying the computer-readable instructions. The combination 77 of hardware components shown in Figure 3 and the computer-readable instructions are configured to implement the functionality of the first information processing apparatus 10, and/or the second information processing apparatus 20

In the description herein, operations caused when one or more processors 71 executes instructions stored in an instruction store 74 will be described generally as operations performed by the first information processing apparatus 10, and/or by the second information processing apparatus 20 (e.g. "the first information processing apparatus 10 obtains...", "the second information processing apparatus 20 stores receives...", etc.).

For ease of reference, the following describes interaction with a single second information processing apparatus 20.

However, the interaction between the first information processing apparatus 10, and any other second information processing apparatus 20, if present, is the same, except that, for example, the first information processing apparatus 10 may send a respective version of an electronic document to each second information processing apparatus 20. As used herein, version of an electronic document indicates that two second information processing apparatus 20 may, for the same identifier, have a different corresponding content.

For example, some of the identifier(s) may identify content that depends on variable factors that are different for some of the second information processing apparatus 20 (e.g. the content is based on the geographic location of each second information processing apparatus 20, a parameter assigned to each second information processing apparatus 20, etc.).

Similarly, although the following describes interaction with a single image forming apparatus 30, the interaction between the first information processing apparatus 10, and any other image forming apparatus 30, if present, is the same, except that the first information processing apparatus 10 may send a respective version of an electronic document to each image forming apparatus 30.

In some implementations, a single second information processing apparatus 20 may receive images of physical documents formed by more than one image forming apparatus (i.e. a one-to-many relationship may exist between the second information processing apparatus and multiple image forming apparatus). The second information processing apparatus 20 may compare each received image with a version of the second document corresponding to the image forming apparatus having sent the image. The second information processing apparatus 20 may send a respective comparison result to each image forming apparatus.

In cases where more than one image forming apparatus 30 are present, the comparison result corresponding to each image forming apparatus may be displayed on a same display unit (e.g. a central monitoring station) or on a different display unit (e.g. a display unit provided on each image forming apparatus).

Processes performed by a first information processing apparatus 10, a second information processing apparatus 20 and an image forming apparatus 30 will now be described.

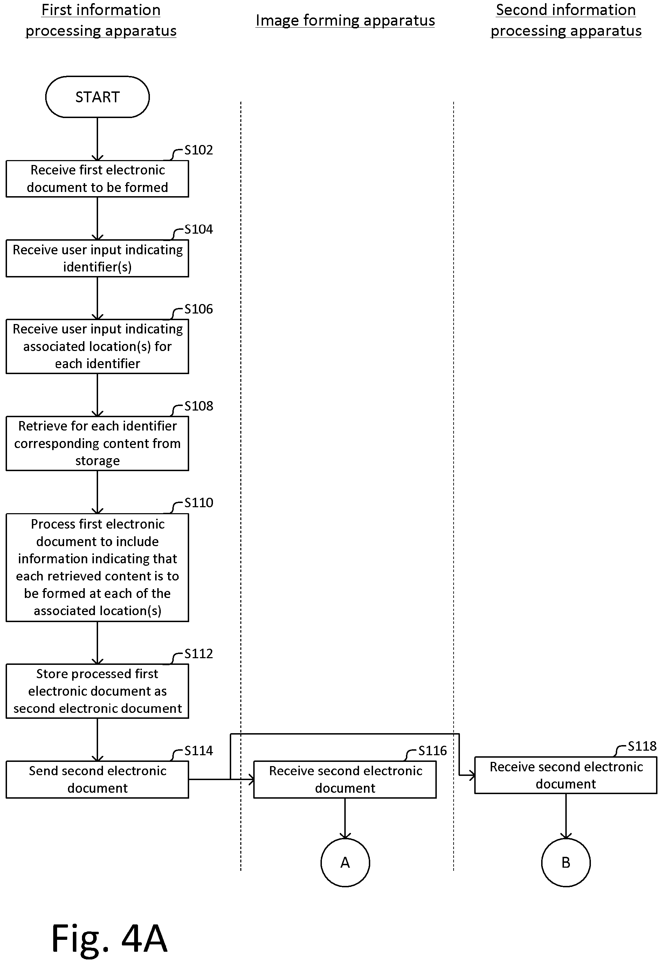

Figures 4A to 4C show a process performed by a first information processing apparatus, an image forming apparatus and a second information processing apparatus, in a first example implementation.

Referring to Figure 4A, at step S102, the first information processing apparatus 10 receives a first electronic document to be formed.

For example, the first electronic document may define information to be formed on a physical medium.

By way of non-limiting examples, the first electronic document may be received (e.g. via input/output communication modules 72) from an external device through any suitable communication link, retrieved from a storage (e.g. a local or remote storage, such as instruction store 74, storage medium 75, or database 50), downloaded from another device (e.g. a server), or the first electronic document may be a document newly generated on the first information processing apparatus 10. Accordingly, whilst in some examples, the obtained first electronic document may include content (e.g. visual content such as written content 512 and/or logo 514), this is not necessarily the case.

At step S104, the first information processing apparatus 10 receives user input indicating at least one identifier.

Each identifier(s) is for identifying a respective content to be formed as part of said first electronic document. Accordingly, the identifier may be defined as "placeholders".

By way of a non-limiting example, identifier(s) may be received by direct user input (e.g. by using a keyboard, mouse or any other input/output device coupled to the first information processing apparatus 10). Identifier(s) may also be received by a user inputting a location storing the identifier(s) (for example, a file storing identifier(s)).

At step S106, the first information processing apparatus 10 receives user input indicating one or more associated location(s) for each identifier.

For sake of convenience, steps S104 and S106 are described sequentially, although it would be understood these may occur as a single action (e.g. if the user inputs the identifier(s) and each associated location by typing or importing a file), or as parallel actions (e.g. if the user input associated location(s) to a first identifier before inputting a second identifier). In cases where user interactions are done via a graphical user interface, GUI, the user may first input a location (e.g. by clicking on a location on the electronic document that is displayed on the GUI) before selecting the corresponding identifier, such that step S106 may start before step S104.

At step S108, the first information processing apparatus 10 retrieves, for each identifier, corresponding content from storage (e.g. a local or remote storage, such as instruction store 74, storage medium 75, or database 50), which stores the identifier(s) and corresponding content in association with each other.

At step S110, the first information processing apparatus 10 processes the first electronic document to include, for each identifier, the corresponding content in association with the one or more associated locations (i.e. the locations associated with the identifier which corresponds to the content being included).

Processing the document may include, for example, editing a file storing the first electronic document to add information defining the content and the associated locations. Following the example of an electronic document being stored as a PDF file, a new tag may be added to the file to define the content and associated locations.

At step S112, the first information processing apparatus stores the processed first electronic document as a second electronic document.

The second electronic document may be stored, for example, on an instruction store 74 or in a working memory 73, by overwriting over the file storing the first electronic document or as a separate file (which may be of a different data format than the file storing the first electronic document). The storage may be in a permanent basis, on a non-volatile storage, or temporary, for example until it is sent to another apparatus, as explained below.

At step S114, the first information processing apparatus 10 sends the second electronic document, as document information, to the image forming apparatus 30 and the second information processing apparatus 20, via network 60.

As used herein, sending an electronic document/document information may be done in any suitable form, such as a transmission of a file storing the electronic document via one or more communication link. Thus, sending document information (or sending an electronic document) to the image forming apparatus and the second information processing apparatus may involve a single transmission to one (e.g. unicast) of the image forming apparatus and the second information processing apparatus, a single transmission to one to both (e.g. multi-cast or broadcast), or multiple (two or more) transmissions, for example by sending parts of the document information in separate transmissions.

At step S116, the image forming apparatus 30 receives the document information (in the present example, the second electronic document), and stores the document information to obtain the second electronic document. This may be a storing on a permanent or temporary basis.

At step S118, the second information processing apparatus 30 receives the document information (in the present example, the second electronic document), and stores the document information (temporarily or permanently) to obtain the second electronic document.

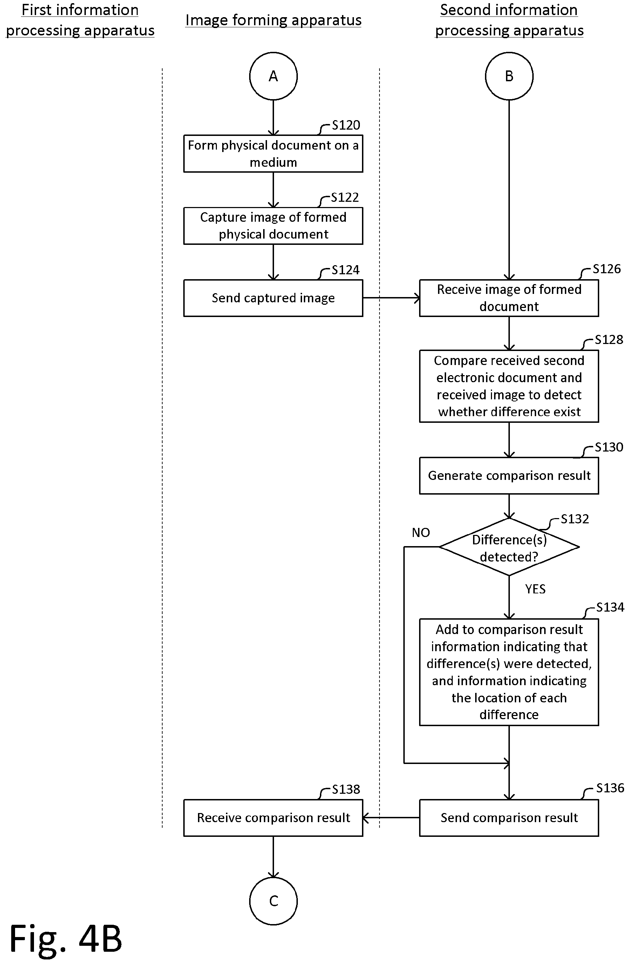

Referring now to Figure 4B, at step S120, the image forming apparatus 30 forms a physical document from the second electronic document, on a physical medium. In other words, an image of the visual content included in the second electronic document is formed on a surface of the physical medium.

At step S122, the image forming apparatus 30 captures an image of the formed physical document.

The image may be captured by any suitable image capturing means coupled to or included in the image forming apparatus 30. The image may be a still-image or video, received from one or more image capturing means. The image capturing means are arranged to aiming towards an image capturing range where the physical document will be located once the image of the second electronic document is formed by the image forming apparatus 30 (e.g. the location where the image forming apparatus 30 outputs formed documents).

At step S124, the image forming apparatus 30 sends the captured image to the second information processing apparatus 20.

The image may be sent by the image forming apparatus 30 via network 60, or any other suitable communication link present between the image forming apparatus and the second information processing apparatus 10.

At step S126, the second information processing apparatus 20 receives the image of the physical document, and stores the image.

At step S128, the second information processing apparatus 20 compares the second electronic document and the image of the physical document to detect whether difference(s) exist.

Various kinds of difference may be present in the physical document, such as a difference in the content, the form, shape, color, code, grading and/or font of the content, the presence of content not included in the second electronic document (i.e. undesired content), the partial or complete absence of content included in the second electronic document, a difference in the arrangement of content (e.g. the spatial relationship between two items of content), etc.

The second information apparatus 20 may be arranged to consider a difference to be detected if the difference is greater than a predetermined threshold. Thresholds may be determined based on the kind of detected difference, based on the physical document (e.g. based on the size, intended use, etc.) based on the content displaying the difference (e.g. the size, an importance of the content, etc.).

It would be understood that while the image capturing means may be arranged to obtain the most accurate representation of the physical document, it may, in some cases, still include information not corresponding to the physical document, such as parts of background that are included in the image capturing range, distortions due to an angle of capture of the image etc. This undesired information may, in particular, depending on the image capturing means or the arrangement of the image capturing means and the image forming means. Accordingly, in some cases, the second information processing apparatus may perform processing on the image to have an image comparable to the second electronic document. Such processing may include, for example, removing information from the image not corresponding to the physical document (e.g. removing parts of the image corresponding to the background, processing to reduce the effect of distortions in the image, etc.). As the conditions of image capture (including the angle, the environmental light conditions, etc.) are predetermined, the processing may be done based using predetermined image transformations.

Any suitable comparison of two electronic document may be used, which may include rendering an image of the second electronic document and performing an image-to-image comparison, performing optical character or pattern recognition on the captured image and comparing the recognized elements with those in the second electronic document, etc.

At step S130, the second information processing apparatus 20 generates a comparison result. The comparison result may include, for example, information identifying the compared image and second electronic document, information identifying the time, date of comparison, the image forming apparatus who formed the physical document, etc.

At step S132, the second information processing apparatus 20 determines whether one or more differences were detected in the comparison at step S128.

If it is determined that one or more difference is detected (YES at step S132), the second information processing apparatus 20 adds to the comparison result information indicating that difference(s) were detected, and information indicating the location of each difference. The information that difference(s) were detected may be formulated as an instruction to interrupt an operation, addressed to the image forming apparatus 30, however, this may not be necessary, for example if the image forming device is arranged to process the comparison result and autonomously interrupt the operation.

Processing then proceed to step S136.

On the other hand, if no difference is detected (NO at step S132) processing in step S134 is skipped.

At step S136, the second information processing apparatus 20 sends the comparison result to the image forming apparatus 30.

At step S138, the image forming apparatus 30 receives the comparison results and stores the comparison results.

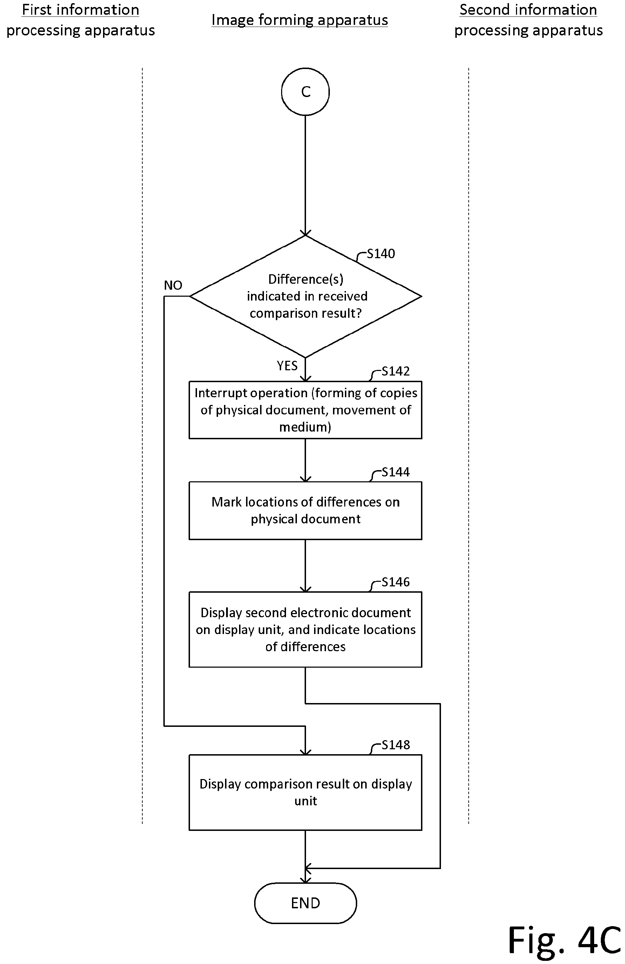

Referring now to Figure 4C, at step S140, the image forming apparatus 30 determines whether differences are indicated in the received comparison result.

If differences are indicated in the received comparison result (YES at step S140), processing proceeds to step S142, the image forming apparatus 30 interrupts an operation.

In an example, the image forming apparatus 30 may be forming multiple copies of the physical document, on a medium being carried along an assembly line. In this example, interrupting an operation means the forming of additional copies of the physical document is stopped, and the assembly line is stopped to prevent movement of the physical document showing the differences.

In another example, the interrupted operation could be the output of the physical document from the image forming apparatus 30. In that case, the physical document displaying differences could be redirected towards another output, or disposed of.

At step S144, the image forming apparatus 30 marks he locations of differences on the physical document.

For example, the image forming apparatus 30 includes a movable printing head arranged to operate in the aforementioned image capturing range, and the image forming apparatus 30 controls the movable printing head to print an indicator on the physical document at the location of the detected difference (or each detected difference).

At step S146, the image forming apparatus 30 displays the second electronic document on the display unit 40, and indicates the locations of differences on the displayed second electronic document.

Processing then skips the processing of step S148.

On the other hand, if no difference is indicated in the received comparison result (NO at step S140), processing skips steps S142, S144 and S146.

At step S148, the image forming apparatus 30 displays the comparison result on the display unit 40. In this case, the displayed comparison result may indicate, for example, that no difference has been detected.

Processing then ends.

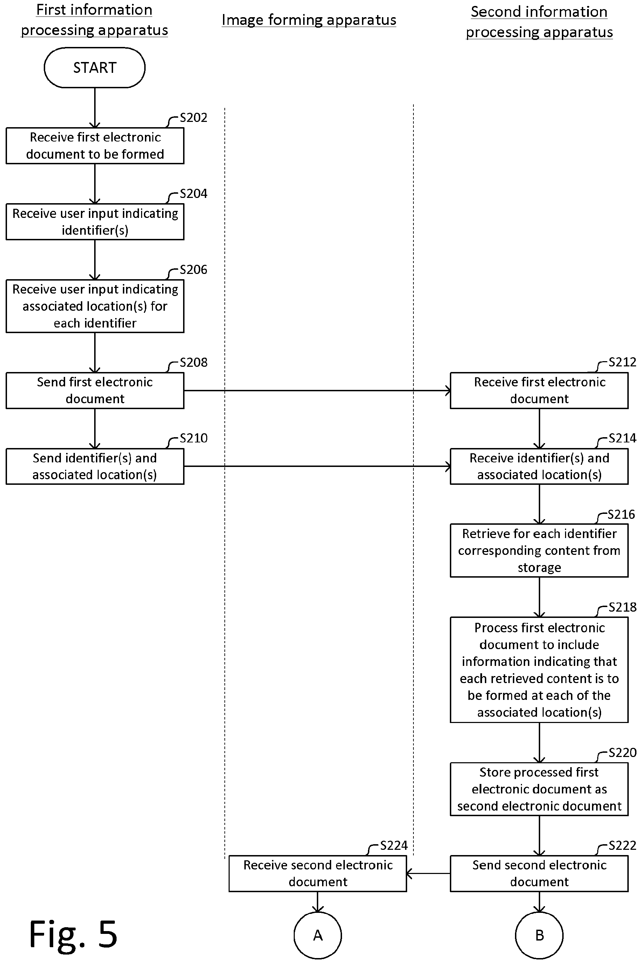

Figure 5 show a process performed by a first information processing apparatus, an image forming apparatus and a second information processing apparatus, in a second example implementation.

Steps S202, S204 and S206 of Figure 5 correspond to steps S102, S104 and S106 of Figure 4A, respectively. Their description will therefore be omitted for brevity.

At step S208, the first information processing apparatus sends the first electronic document to the second information processing apparatus 20.

At step S210, the first information processing apparatus sends the at least one identifier and, for each of said at least one identifier, said one or more associated locations.

The identifier(s) and the associated locations may be sent separately or together in a single transmission.

The first electronic document, the identifier(s) and the associated locations sent at steps S208 and S210 may collectively be defined as document information. Although they are shown as separate steps, Steps S208 and S210 may occur in a single transmission.

At step S212, the second information processing apparatus receives the first electronic document, and stores the first electronic document.

At step S214, the second information processing apparatus receives the at least one identifier(s) and the associated locations, and stores the identifier(s) and associated locations.

Steps S216, S218, S220 and S222 on Figure 5 correspond to steps S108, S110, S112 and S114 on Figure 4, respectively, except that they are performed by the second information processing apparatus 20. Their description will therefore be omitted for brevity.

The processing then carries on as describe with reference to Figures 4B and 4C above.

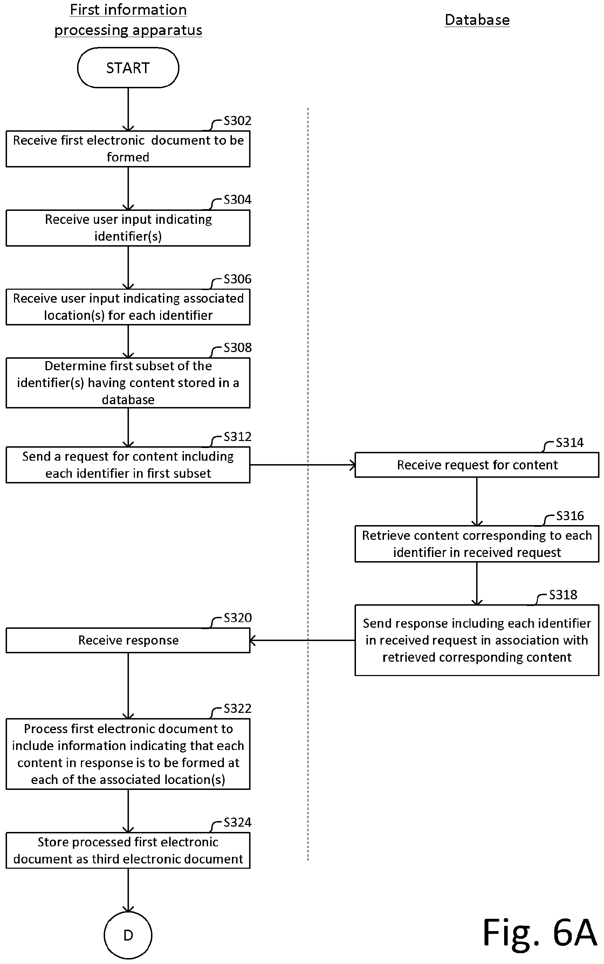

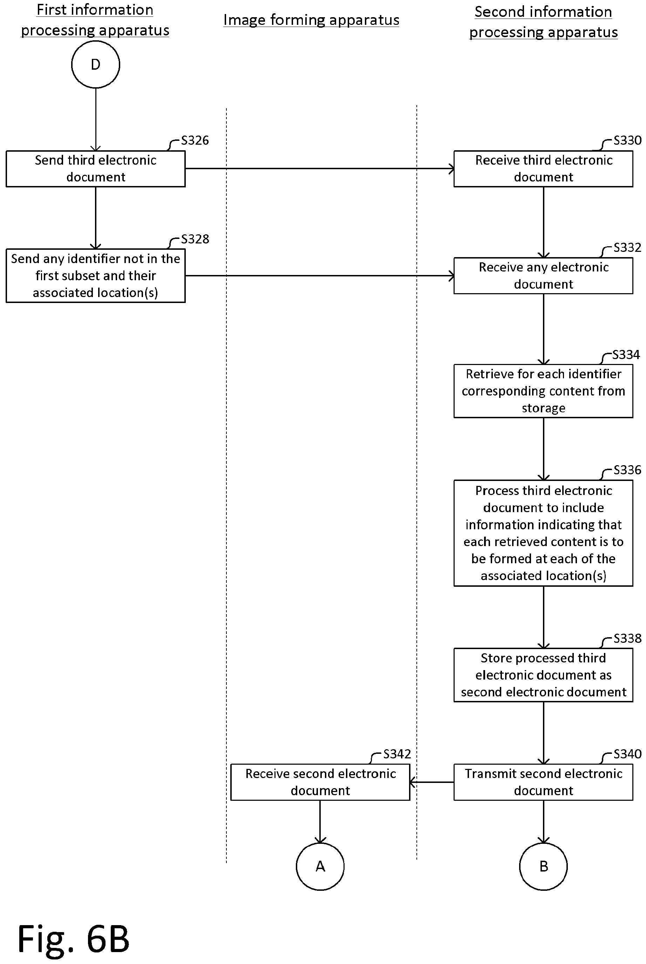

Figure 6A and 6B show processing operations performed by a first information processing apparatus, a database, an image forming apparatus and a second information processing apparatus, in a third example implementation.

Steps S302, S304 and S306 on Figure 6a correspond to steps S102, S104 and S106 on Figure 4A, respectively. Their description will therefore be omitted for brevity.

At step S308, the first information processing apparatus 10 determines a first subset of the at least one identifier as identifiers having content stored in a predetermined database (for example, database 50).

For example, the first subset of identifiers may correspond to all of the at least one identifier whose corresponding content is accessible to the first information processing apparatus. Therefore, the processing load on the second information processing apparatus 20 and/or the image forming apparatus 10 may be reduced.

Although this first subset of identifier(s) is described to have its content stored on a database, other ways of determining the first subset may be used.

For example, the first information processing apparatus may determine which of the identifier(s) have a corresponding content that is not variable, such that the content can safely be included before sending the document to the image forming apparatus 30 and/or the second information processing apparatus 20. The first information processing apparatus 10 may also determine for each identifier the size (e.g. in terms of bits or bytes) of the corresponding content, and determine the first subset to include the identifiers having a content smaller or equal to a predetermined threshold size. Additionally or alternatively to the size or the permanence of the content, the first information processing apparatus 10 may also determine that the identifier(s) whose content is not accessible to the image forming apparatus 30 and/or the second information processing apparatus 20 are to be included in the first subset, for example if this content is stored in a secure location (e.g. the database 50) accessible only to the first information processing apparatus 10. This allows the preparation and forming of document whilst avoiding degradations to the security of the location storing content, such as digital assets.

At step S310, the first information processing apparatus 10 sends a request for content to the database 50, including in the request each identifier of the first subset. For example, the request may be any suitable type of data query from database systems.

At step S312, the database 50 receives the request for content.

At step S314, the database 50 retrieves the content corresponding to each identifier in the received request.

At step S316, the database 50 sends a response to the first information processing apparatus 10. The response includes each identifier in the received request in association with the corresponding content that was retrieved.

At step S318, the first information processing apparatus 10 receives the response.

At step S320, the first information processing apparatus 10 processes the first electronic document to include information indicating that for each identifier in the first subset, the corresponding content received from the database is to be formed at each of the location(s) associated with the identifier. The processing at step S320 on Figure 6A correspond to that of Step S110 on Figure 4A, except it is performed only for the identifier(s) in the first subset.

At step S322, the first information processing apparatus 10 stores the processed first electronic document as a third electronic document, similarly to the processing described for step S112 on Figure 4A above.

Referring now to Figure 6B, at step S324, the first information processing apparatus 10 sends the third electronic document to the second information processing apparatus 20.

At step S326, the first information processing apparatus determines, a second subset, those of the at least one identifier that are not included in the first subset. The first information processing sends the second subset of identifier(s) and their associated locations to the second information processing apparatus 20.

Steps S328, S330, S332, S334, S336, S338 and S340 correspond to the processing of steps S212, S214, S216, S218, S220, S222 and S224 on Figure 5, except that the document received by the second information processing apparatus is the third electronic document, which already includes some of the content. Their description will therefore be omitted for brevity.

The processing then carries on as describe with reference to Figures 4B and 4C above.

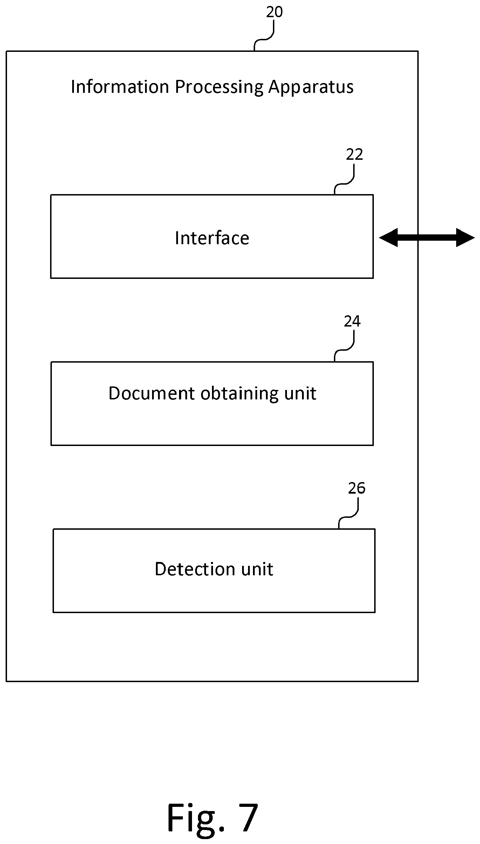

Figure 7 shows a schematic diagram illustrating an information processing apparatus in example embodiments.

The information processing apparatus 20 includes an interface 22, a document obtaining unit 24, and a detection unit 26. The information processing apparatus 20 may be suitable for preparing, at least in part, an electronic document to be formed. The information processing apparatus 20 may be suitable for controlling an image forming apparatus forming said electronic document.

The interface 22 may, for example, comprise one or more input/output communication modules 72 as shown on Figure 3.

The interface 22 may be configured to communicate with other apparatus, and in particular to receive an image of a document formed by the image forming apparatus 30 and to send a comparison result based on processing of the detection unit as explained below. The interface 22 may also be configured to receive an electronic document and at least one identifier, as explained above.

The document obtaining unit 24 is configured to obtain an electronic document to be formed. This may be an electronic document received by the interface 22, or the document obtaining unit 24 may be configured to generate the electronic document to be formed by retrieving content corresponding to each of at least one identifier received by the interface 22 and include the retrieved content into the electronic document so as to have the retrieved content appear at the location(s) associated with the corresponding identifier when an image of the electronic document is formed on a physical document.

The detection unit 26 may be arranged to compare an electronic document, the document obtained by the document obtaining unit 24, and the image received by the interface 22. The detection unit 26 outputs a comparison result to the interface 22. If a difference is detected, the detection unit 26 includes into the comparison result information for causing the image forming apparatus to interrupt an operation and display said comparison result on a display unit.

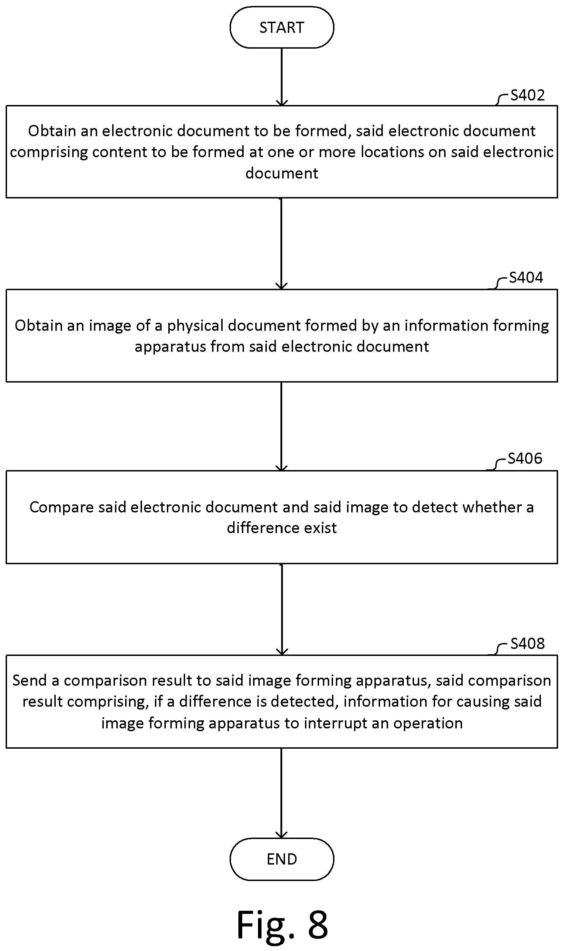

In summary, it will be appreciated from the description above that certain example embodiments perform processing operations to effect a method as shown in Figure 8 that is performed by an information processing apparatus.

Referring to Figure 8, at step S402, the information processing apparatus obtains an electronic document to be formed, said electronic document comprising content to be formed at one or more locations on said electronic document.

At step S404, the information processing apparatus obtains an image of a physical document formed by an image forming apparatus from said electronic document.

At step S406, the information processing apparatus compares said electronic document and said image to detect whether a difference exist.

At step S408, the information processing apparatus sends a comparison result to said image forming apparatus, said comparison result comprising, if a difference is detected, information for causing said image forming apparatus to interrupt an operation.

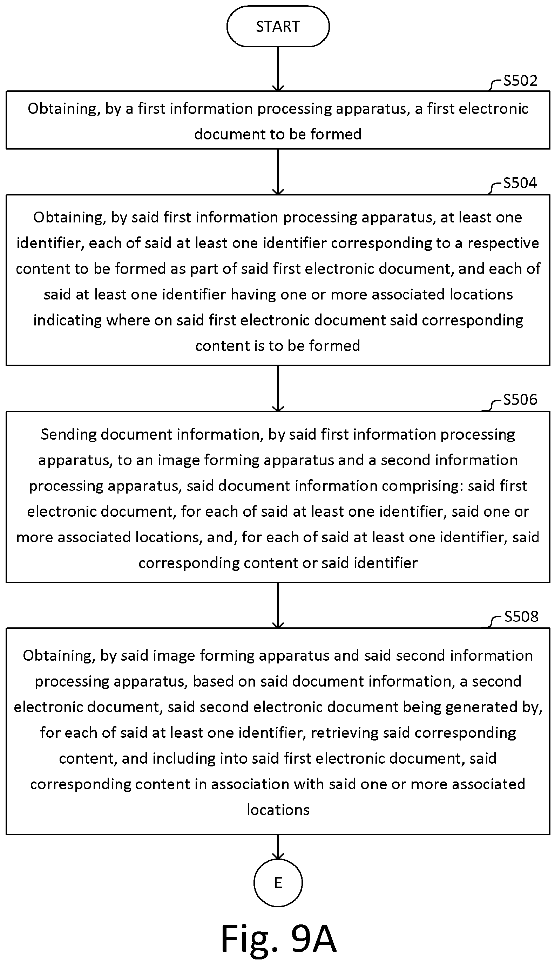

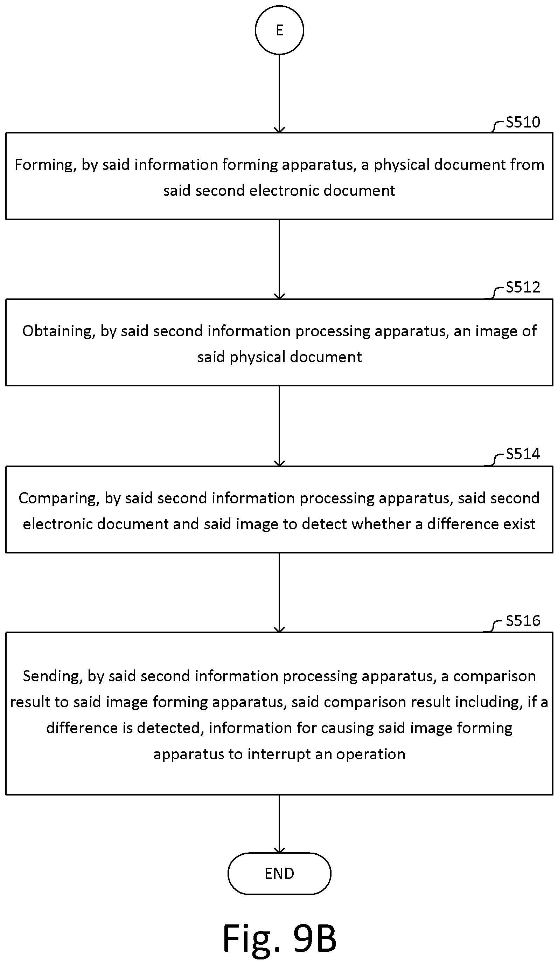

It will also be appreciated from the description above that certain example embodiments perform operations to effect a method as shown in Figures 9A and 9B.

Referring to Figure 9A, at step S502, a first information processing apparatus obtains a first electronic document to be formed.

At step S504, the first information processing apparatus obtains at least one identifier. Each of the at least one identifier may be corresponding to a respective content to be formed as part of the first electronic document. Each of the at least one identifier may have one or more associated locations indicating where on said first electronic document said corresponding content is to be formed.

At step S506, the first information processing apparatus sends document information to an image forming apparatus and a second information processing apparatus. The document information comprising: the first electronic document, for each of the at least one identifier, the one or more associated locations, and, for each of the at least one identifier, the corresponding content or the identifier.

At step S508, the image forming apparatus and the second information processing apparatus obtain, based on the document information, a second electronic document. The second electronic document is generated by, for each of the at least one identifier, retrieving the corresponding content, and including into the first electronic document, the corresponding content in association with the one or more associated locations.

At step S510, the image forming apparatus forms a physical document from the second electronic document.

At step S512, the second information processing apparatus obtains an image of the physical document.

At step S514, the second information processing apparatus compares the second electronic document and the image to detect whether a difference exist.

At step S516, the second information processing apparatus sends a comparison result to the image forming apparatus. The comparison result includes, if a difference is detected, information for causing the image forming apparatus to interrupt an operation.

### Modifications and variations

Many modifications and variations can be made to the example embodiments described above.

For example, at step S126, the second information apparatus may, upon obtaining the second electronic document, request the image from the image forming apparatus 30, or it may retrieve the image from a location in memory where the image will be stored (by the image forming apparatus 30 or by the image capturing means directly).

In some implementations, the second information processing apparatus 20 may be communicatively coupled to the image capturing means to capture the image of the physical document. Thus, steps S122, S124 and S126 may be omitted. Accordingly, an image forming apparatus that does not have the capability to capture image (or control an external image capturing means) may be used as well.

Instead of receiving user input indicating the identifier(s) at step S104, the first information processing apparatus 10 may retrieve, based on a characteristic of the electronic document, a number of identifiers that are associated with the characteristic. The characteristic may be, for example, a name of the electronic document or a file storing the electronic document, a name of an author, a size of the electronic document, the source of the document (i.e. how the document was obtained).

Alternatively, or in addition thereto, the first information processing apparatus 10 may retrieve a number of identifiers that are associated with the user. The characteristic may be, for example, a name of the electronic document or a file storing the electronic document, a name of an author, a size of the electronic document, the source of the document (i.e. how the document was obtained).

In some implementations, the first electronic document may include (e.g. as metadata) information indicating the at least one (predefined) identifiers. Accordingly, no user input indicating the identifier(s) is required and step S104 may be omitted.

In some implementations, the first electronic document may include (e.g. as metadata) information indicating one or more (predefined) locations. Accordingly, step S106 may be replaced by processing to acquire associations between identifier(s) and (predefined) locations.

In some implementations, the first electronic document may include (e.g. as metadata) information indicating at least one (predefined) identifier, and information indicating one or more (predefined) locations. Accordingly, the processing at steps S104 and S106 may be replaced by processing to acquire associations between (predefined) identifier(s) and (predefined) locations.

In some implementations, the information indicating the location of each difference may be omitted from the comparison result. For example, if the physical document will be discarded without review, or if the difference can be attributed to a one-time issue, or if the presence of a difference indicates that the electronic document cannot be formed by the image forming apparatus.

In some implementations, for the processing at step S144, controllable indicator means may be arranged to project the indicator (e.g. as light) on the image capturing area, at the location of the difference. For example, a directable light emitter (e.g. laser pointer), as an example of indicator means, may be arranged to project laser light onto the physical document located in the image capturing range (or a range near the output of the image forming apparatus 30). The image forming apparatus 30 can control the light emitter to point towards the location of the difference, and to project a light at or near the difference. An array of light emitter may be used instead to mark multiple differences.

In some implementations, for the processing at step S144, indicating the location of the difference on the physical document includes applying (e.g. by means of adhesive), on the surface of the document, a physical marker, which may be removable.

In some implementations, the second information processing apparatus 20 may be arranged to control indicator means (such as the aforementioned directable light emitter).

In some implementations, the processing of step S144, step S146, or both, may be skipped, if indicating the differences is not necessary (e.g. for obvious differences).

In some implementations, the step of S148 may be omitted, for example if the absence of differences or errors is not needed to be reported.

In some implementations, steps S146 and S148 may be omitted. For example, in case the interruption of the operation does not require the comparison result to be displayed at all. Accordingly, it would be understood that the display unit 40 may be omitted from the system. Similarly, all described interactions with display unit 40 (e.g. the image forming apparatus displaying information on the display unit) may be omitted.

In some implementations, step S142 and/or step S144 may be omitted, for example if the display of the comparison result indicating differences is sufficient, and the operation of the image forming apparatus need not be interrupted (and/or marking the physical document is not required).

In some implementations, at step S208 and S210, the first information processing apparatus 10 may send the first electronic document, the identifier(s) and each associated location(s) to the image forming apparatus 30 instead of, or in addition to the second information processing apparatus 20. In such implementations, the image forming apparatus 30 may perform the processing of steps S212 to S220. If both the image forming apparatus 30 and the second information processing apparatus perform steps S212 to S220, steps S222 and S224 may be omitted.

In some implementations, the content corresponding to the identifiers of the first subset may be stored on the first information processing apparatus instead, such that steps S310 , S312, S314, S316 and S318 may be omitted.

A person skilled in the art will, of course, recognize that modifications other than those described above can be made.

The example aspects described here avoid limitations, specifically rooted in computer technology, relating to the preparation of electronic document to be formed. By virtue of the example aspects described herein, preparation of electronic documents, and the detection of differences between electronic documents and corresponding physical documents may be improved. This may be achieved without any modification to the image forming device. Also, by virtue of the foregoing capabilities of the example aspects described herein, which are rooted in computer technology, the example aspects described herein improve computers and computer processing/functionality, and also improve the field(s) of at least data processing and data storage.

In the foregoing description, example aspects are described with reference to several example embodiments. Accordingly, the specification should be regarded as illustrative, rather than restrictive. Similarly, the figures illustrated in the drawings, which highlight the functionality and advantages of the example embodiments, are presented for example purposes only. The architecture of the example embodiments is sufficiently flexible and configurable, such that it may be utilized in ways other than those shown in the accompanying figures.

Software embodiments of the examples presented herein may be provided as, a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nano systems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the example embodiments described herein. Such software may include without limitation device drivers, operating systems, and user applications. Ultimately, such computer-readable media or storage device(s) further include software for performing example aspects of the invention, as described above.

Included in the programming and/or software of the system are software modules for implementing the procedures described herein. In some example embodiments herein, a module includes software, although in other example embodiments herein, a module includes hardware, or a combination of hardware and software.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above described example embodiments, but should be defined only in accordance with the following claims and their equivalents.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that any procedures recited in the claims need not be performed in the order presented.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments and embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description, and changes that come within the meaning and range of equivalence of the claims are embraced therein.

## Claims

1. A method comprising:
obtaining, by a first information processing apparatus, a first electronic document to be formed;
obtaining, by said first information processing apparatus, at least one identifier,
each of said at least one identifier corresponding to a respective content to be formed as part of said first electronic document,
each of said at least one identifier having one or more associated locations indicating where on said first electronic document said corresponding content is to be formed;
sending document information, by said first information processing apparatus, to an image forming apparatus and/or a second information processing apparatus,
said document information comprising: said first electronic document, for each of said at least one identifier, said one or more associated locations, and, for each of said at least one identifier, said corresponding content or said identifier;
obtaining, by said image forming apparatus and said second information processing apparatus, based on said document information, a second electronic document, said second electronic document being generated by, for each of said at least one identifier, retrieving said corresponding content, and including into said first electronic document, said corresponding content in association with said one or more associated locations;
forming, by said image forming apparatus, a physical document from said second electronic document;
obtaining, by said second information processing apparatus, an image of said physical document;
comparing, by said second information processing apparatus, said second electronic document and said image to detect whether a difference exist; and
sending, by said second information processing apparatus, a comparison result to said image forming apparatus, said comparison result including, if a difference is detected, information for causing said image forming apparatus to interrupt an operation.

2. The method of claim 1, wherein said first information processing apparatus generates said second electronic document, and sends said second electronic document as said document information.

3. The method of claim 1, wherein
said first information processing apparatus sends, as said document information, said first electronic document, said at least one identifier, and for each of said at least one identifier, said one or more associated locations, to said image forming apparatus and said second information processing apparatus;
said image forming apparatus and said second information processing apparatus generate said second electronic document.

4. The method of claim 1, wherein said first information processing apparatus generates a third electronic document by retrieving, for each of a first subset of said at least one identifier, said corresponding content, and including said corresponding content into said third electronic document in association with said one or more associated locations;
said first information processing apparatus sends, as said document information, said third electronic document and a second subset of said at least one identifier;
each of said at least one identifier being in one of said first subset and said second subset only.

5. The method of any of claims 1 to 4, wherein said comparison result includes difference information indicating one or more locations on said physical document where said difference is detected.

6. The method of claim 5, wherein said image forming apparatus indicates on said physical document said one or more locations based on said difference information.

7. The method of claim 5 or 6, wherein said comparison result causing said image forming apparatus to display, on a display unit, said second electronic document and to indicate said one or more locations on the displayed second electronic document based on said difference information.

8. The method of any of claims 1 to 7, wherein said first information processing apparatus obtains said at least one identifier and said one or more associated locations, based on user input.

9. The method of any of claims 1 to 8, wherein
said first information processing apparatus sends said document information to a plurality of image forming apparatus and/or a plurality of second information processing apparatus, each of said plurality of second information processing apparatus having a respective corresponding one of said plurality of image forming apparatus,
each of said plurality of image forming apparatus:
obtains, based on said document information, a respective version of said second electronic document, and
forms a respective version of said physical document; and
each of said plurality of second information processing apparatus:
obtains, based on said document information, said respective version of said second electronic document;
obtains an image of said respective version of said physical document formed by said corresponding image forming apparatus;
compares said respective version of said second electronic document and said image of said respective version of said physical document to detect whether a difference exist; and
sends a respective comparison result to said corresponding image forming apparatus, said respective comparison result including, if a difference is detected, information for causing said corresponding image forming apparatus to interrupt an operation.

10. A system comprising a first information processing apparatus, a second information processing apparatus, and an image forming apparatus, wherein:
said first information processing apparatus is configured to:
obtain a first electronic document to be formed,
obtain at least one identifier,
each of said at least one identifier corresponding to a respective content to be formed as part of said first electronic document, and
each of said at least one identifier having one or more associated locations indicating where on said first electronic document said corresponding content is to be formed; and
send document information to the image forming apparatus and/or the second information processing apparatus, said document information comprising:
said first electronic document,
for each of said at least one identifier, said one or more associated locations, and,
for each of said at least one identifier, said corresponding content or said identifier;
said image forming apparatus is configured to:
obtain, based on said document information, a second electronic document, said second electronic document being generated by, for each of said at least one identifier, retrieving said corresponding content and including into said first electronic document, said corresponding content in association with said one or more associated locations;
form a physical document from said second electronic document;
said second information processing apparatus is configured to:
obtain said second electronic document;
obtain an image of said physical document;
compare said second electronic document and said image to detect whether a difference exist; and
send a comparison result to said image forming apparatus, said comparison result including, if a difference is detected, information for causing said image forming apparatus to interrupt an operation.

11. A method for an information processing apparatus, the method comprising:
obtaining an electronic document to be formed, said electronic document comprising content to be formed at one or more locations on said electronic document;
obtaining an image of a physical document formed by an image forming apparatus from said electronic document;
comparing said electronic document and said image to detect whether a difference exist; and
sending a comparison result to said image forming apparatus, said comparison result comprising, if a difference is detected, information for causing said image forming apparatus to interrupt an operation.

12. The method of claim 11, the method comprising:
receiving, a second electronic document and at least one identifier,
each of said at least one identifier corresponding to a respective second content to be formed as part of said second electronic document, and
each of said at least one identifier having one or more associated second locations indicating where on said second electronic document said corresponding second content is to be formed;
generating said electronic document by, for each of said at least one identifier, retrieving said corresponding second content, and including into said second electronic document said corresponding second content in association with said one or more associated second locations.

13. A computer program comprising instructions which, when executed by one or more processor, cause the one or more processor to carry the method of claim 11 or claim 12.

14. An information processing apparatus comprising:
a document obtaining unit configured to obtain an electronic document to be formed, said electronic document comprising content to be formed at one or more location on said electronic document;
an interface configured to obtain an image of a physical document formed by an image forming apparatus from said electronic document;
a detection unit configured to compare said electronic document and said image to detect whether a difference exist;
wherein the interface is configured to send a comparison result to said image forming apparatus, said comparison result comprising, if a difference is detected, information for causing said image forming apparatus to interrupt an operation.

15. The information processing apparatus of claim 14, wherein:
said interface is configured to receive a second electronic document and at least one identifier,
each of said at least one identifier corresponding to a respective second content to be formed as part of said second electronic document, and
each of said at least one identifier having one or more associated second locations indicating where on said second electronic document said corresponding content is to be formed;
said document obtaining unit is configured to generate said electronic document by, for each of said at least one identifier, retrieving said corresponding second content and including into said second electronic document, said corresponding second content in association with said one or more associated second locations.
